# DEMANDE DE BREVET EUROPEEN

(11) **EP 1 659 734 A1**
(43) Date de publication de la demande: **24.05.2006**
(21) Numéro de dépôt: 05110820.7
(22) Date de dépôt: 16.11.2005
(51) Int. Cl.: H04L 12/24, H04L 12/28

(54) **Dispositif et procédé de gestion d'établissement automatique de connexions haut débit pour l'accès de terminaux à des réseaux de données**

(30) Priorité: 17.11.2004 FR 0452654
(71) Demandeur: ALCATEL, 75008 Paris (FR)
(72) Inventeur: Krishnan, Madhu-Kumar, 2610, Wilrijk (BE); Martinot, Olivier, 91210, Draveil (FR); Mathieu, Guy, 91400, Orsay (FR)
(74) Mandataire: Chaffraix, Sylvain

(57) **Abrégé**

Un dispositif (D) est dédié à la gestion d'établissement de connexions haut débit pour l'accès de terminaux de communication (TS, PC, TIP) à au moins un réseau de données (RD), via des réseaux (RFS) de fournisseurs de services et un équipement d'accès haut débit (EA) raccordé à au moins un réseau d'accès haut débit géré par un système de gestion (SG) et à au moins un réseau de transport (RATM, RIP), lui-même raccordé aux réseaux des fournisseurs de services (RFS). Ce dispositif (D) comprend des moyens d'analyse (MA) chargés d'observer les connexions haut débit au réseau d'accès et de détecter des erreurs de connexion haut débit de terminaux, et des moyens de gestion (MG) chargés de signaler au système de gestion (SG) chaque erreur de connexion haut débit de terminal détectée et de lui transmettre des informations représentatives au moins d'un fournisseur de services associé à ce terminal afin qu'il configure l'équipement (EA) et le réseau de transport (RATM, RIP) associé pour que cet équipement (EA) puisse accéder au réseau (RFS) du fournisseur de services et puisse lui transmettre des données reçues du terminal et représentatives au moins de son utilisateur et du type de connexion haut débit qu'il requiert, en vue de l'établissement de cette dernière.

## Description

L'invention concerne les réseaux de communication, et plus précisément l'établissement de connexions haut débit au sein de tels réseaux.

On entend ici par « connexion haut débit » tout type de connexion établie entre un terminal de communication et un réseau de données, comme par exemple Internet, via un fournisseur d'accès physique et un fournisseur de services (éventuellement confondus). Il pourra donc s'agir d'une connexion radio (WiFi ou WiMAX), ou par câble (fibre optique), ou encore de type xDSL (ou x Digital Subscriber Line) » sur une ligne numérique à paire, symétrique ou asymétrique, utilisant les fréquences inexploitées des lignes téléphoniques des réseaux téléphoniques commutés (ou PSTN), et notamment les connexions ADSL (« Asymetric DSL »), HDSL (« High bit rate DSL »), RDSL (« Rate adaptive DSL »), VDSL (« Very high bit rate DSL ») et SDSL (« Single line DSL »).

Pour qu'un terminal de communication, raccordé à un réseau de téléphonie, puisse accéder à un réseau de données en haut débit, comme par exemple le réseau Internet, il doit, par exemple, utiliser une connexion de type xDSL définie sur une ligne téléphonique (et associée à un numéro de téléphone). Cela concerne les terminaux des utilisateurs qui ne sont pas encore clients d'un fournisseur de services (ou « Service provider ») permettant d'accéder à un réseau de données, mais également les terminaux des utilisateurs « nomades » qui sont clients d'un fournisseur de services et disposent déjà d'une connexion xDSL mais pour une ligne de téléphone différente de celle à laquelle ils souhaitent se connecter.

L'établissement d'une connexion haut débit, par exemple de type xDSL, nécessite de nombreuses interventions humaines qui peuvent s'étaler sur plusieurs jours. En effet, l'utilisateur requérant doit tout d'abord contacter le fournisseur de services qu'il a choisi afin de lui communiquer au moins son identité, le numéro de téléphone de la ligne du réseau PSTN qu'il souhaite utiliser pour connecter son terminal, et le type de connexion xDSL qu'il a choisi. Ensuite, un technicien doit établir manuellement des connexions de réseau au niveau d'un équipement d'accès xDSL (ou DSLAM pour « Digital Subscriber Line Access Multiplexer ») du réseau d'accès qui appartient au (ou est loué par le) fournisseur d'accès physique (ou « access provider ») qui gère la ligne téléphonique de l'utilisateur requérant une connexion xDSL. Puis, un technicien doit déclarer l'utilisateur requérant auprès d'un système de gestion du réseau d'accès physique ainsi qu'auprès du fournisseur de services choisi par ledit utilisateur, afin qu'ils procèdent à la configuration du réseau d'accès et du réseau privé du fournisseur de services. L'utilisateur ne sachant pas précisément le temps que va prendre la phase d'établissement de sa connexion xDSL, il doit donc tester cette dernière régulièrement jusqu'à ce qu'elle soit utilisable.

L'invention a donc pour but de remédier à cet inconvénient.

Elle propose à cet effet un dispositif dédié à la gestion de l'établissement de connexions haut débit pour l'accès de terminaux de communication à au moins un réseau de données, via des réseaux de fournisseurs de services et un équipement d'accès haut débit (par exemple de type DSLAM dans le cas d'une connexion xDSL), raccordé à au moins un réseau d'accès (physique) haut débit géré par un système de gestion et à au moins un réseau de transport, lui-même raccordé aux réseaux des fournisseurs de services.

Ce dispositif de gestion se caractérise par le fait qu'il comprend :
- des moyens d'analyse chargés d'observer les connexions haut débit au réseau d'accès et de détecter des erreurs de connexion haut débit de terminaux, et
- des moyens de gestion chargés de signaler au système de gestion chaque erreur de connexion haut débit de terminal détectée et de lui transmettre des informations représentatives au moins d'un fournisseur de services associé à ce terminal afin qu'il configure l'équipement et le réseau de transport associé pour que cet équipement puisse accéder au réseau du fournisseur de services et puisse lui transmettre des données reçues du terminal et représentatives au moins de son utilisateur et du type de connexion haut débit qu'il requiert, en vue de l'établissement de cette dernière.

Le dispositif selon l'invention peut comporter d'autres caractéristiques qui peuvent être prises séparément ou en combinaison, et notamment :
- ses moyens de gestion peuvent être chargés, d'une part, de signaler une erreur de connexion haut débit au système de gestion afin qu'il configure l'équipement pour qu'il puisse accéder à un portail du réseau d'accès haut débit et puisse lui transmettre des données reçues du terminal et représentatives du fournisseur de services que son utilisateur a choisi, et d'autre part, de transmettre au système de gestion ces données représentatives du fournisseur de services afin qu'il procède à la configuration de l'équipement et du réseau de transport associé pour que cet équipement accède au réseau du fournisseur de services ;
- lorsque le terminal est utilisé par un client d'un fournisseur de services qui est identifié par un code d'accès, les moyens de gestion peuvent être chargés de transmettre au système de gestion des informations représentatives du code d'accès transmis afin qu'il détermine le fournisseur de services correspondant à ce code d'accès et procède à la configuration de l'équipement et du réseau de transport associé pour que cet équipement accède au réseau du fournisseur de services ;
   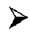 ses moyens de gestion peuvent être chargés de communiquer à l'équipement des données représentatives d'un nom d'utilisateur et/ou d'un mot de passe (reçus du terminal) afin qu'il le(s) transmette au réseau du fournisseur de services pour qu'il détermine s'il(s) appartienne(nt) à un de leurs clients et détermine le type de connexion haut débit associé.

L'invention propose également un équipement d'accès haut débit (par exemple de type DSLAM dans le cas d'une connexion xDSL) équipé d'un dispositif de gestion du type de celui présenté ci-avant.

L'invention propose également un procédé dédié à l'établissement de connexions haut débit et consistant :
- à observer les connexions haut débit au niveau de l'équipement d'accès (physique) haut débit et à détecter des erreurs de connexion haut débit de terminaux,
- à signaler au système de gestion chaque erreur de connexion de terminal détectée et à lui transmettre des informations représentatives au moins d'un fournisseur de services associé à ce terminal, et
- à configurer l'équipement et le réseau de transport associé, au moyen du système de gestion, pour que cet équipement puisse accéder au réseau du fournisseur de services et puisse lui transmettre des données reçues du terminal et représentatives au moins de son utilisateur et du type de connexion haut débit qu'il requiert, en vue de l'établissement de cette dernière.

Le procédé selon l'invention peut comporter d'autres caractéristiques qui peuvent être prises séparément ou en combinaison, et notamment :
- lorsqu'un fournisseur de services décide d'autoriser l'établissement d'une connexion haut débit, on peut transmettre cette autorisation au système de gestion afin qu'il configure au moins l'équipement et le réseau d'accès haut débit de manière à permettre l'établissement de la connexion haut débit requise ;
- lorsqu'il reçoit un signalement d'erreur de connexion haut débit le système de gestion peut configurer l'équipement pour qu'il puisse accéder à un portail du réseau d'accès haut débit et puisse lui transmettre des données reçues du terminal et représentatives du fournisseur de services que son utilisateur a choisi, puis on transmet au système de gestion ces données représentatives du fournisseur de services afin qu'il procède à la configuration de l'équipement et du réseau de transport associé pour que cet équipement accède au réseau du fournisseur de services ;
- lorsque le terminal est utilisé par un client d'un fournisseur de services identifié par un code d'accès, on peut transmettre au système de gestion des informations représentatives du code d'accès afin qu'il détermine le fournisseur de services correspondant à ce code d'accès puis procède à la configuration de l'équipement et du réseau de transport associé pour que cet équipement accède au réseau du fournisseur de services ;
   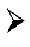 on peut communiquer à l'équipement des données représentatives d'un nom d'utilisateur et/ou d'un mot de passe (transmis par le terminal) afin qu'il le(s) transmette au réseau du fournisseur de services pour qu'il détermine s'il(s) appartienne(nt) à l'un de ses clients puis qu'il détermine le type de connexion haut débit associé ;
- le réseau du fournisseur de services peut requérir auprès du terminal la durée de la connexion haut débit souhaitée par son utilisateur ;
- lorsque le terminal transmet au réseau du fournisseur de services des données représentatives de nouvelles caractéristiques de connexion haut débit, le système de gestion peut adapter l'ancienne connexion haut débit qui est associée au nom d'utilisateur et/ou au mot de passe précédemment reçu(s) ;
- le système de gestion peut configurer l'équipement et le réseau de transport associé pour que cet équipement accède à un portail connecté au réseau du fournisseur de services et lui transmette les données reçues dudit terminal ;
   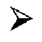 le réseau de chaque fournisseur de services peut générer les autorisations d'établissement de connexion haut débit au niveau d'un portail.

L'invention est particulièrement bien adaptée, bien que de façon non limitative, aux connexions de type xDSL. Mais, elle concerne également d'autres types de connexion haut débit, et notamment celles effectuées par voie d'ondes radio (par exemple WiFi ou WiMAX) ou au moyen de câbles à fibres optiques.

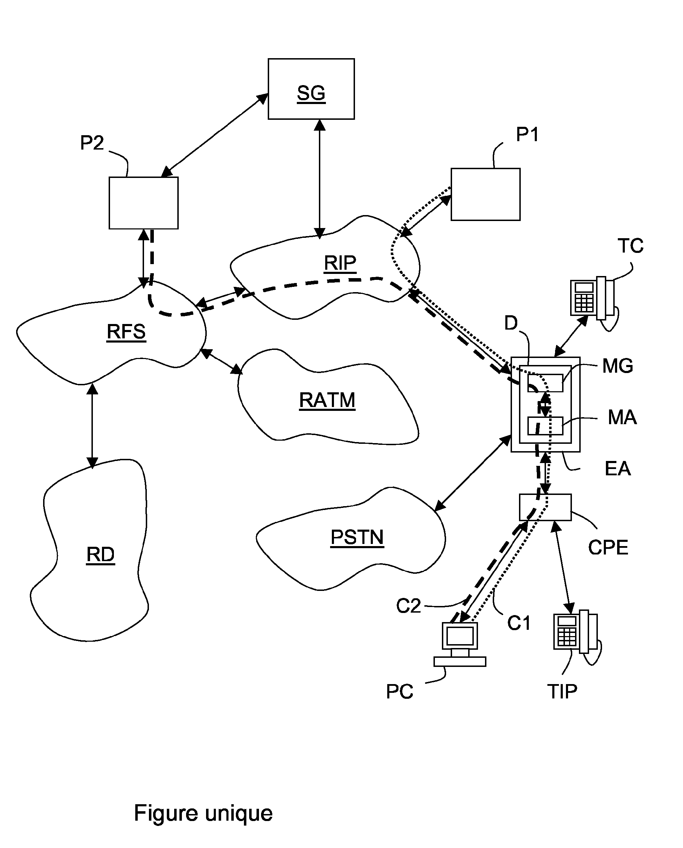

D'autres caractéristiques et avantages de l'invention apparaîtront à l'examen de la description détaillée ci-après, et du dessin annexé, sur lequel l'unique figure illustre de façon très schématique un exemple de combinaison de réseaux de communication comportant un dispositif de gestion selon l'invention. Le dessin annexé pourra non seulement servir à compléter l'invention, mais aussi contribuer à sa définition, le cas échéant.

L'invention a pour objet de permettre l'établissement automatique de connexions haut débit entre des terminaux de communication et des réseaux de données via des réseaux de fournisseur(s) d'accès et de fournisseur(s) de services.

On considère dans ce qui suit, à titre d'exemple non limitatif, que les connexions haut débit sont de type xDSL, par exemple ADSL, et donc qu'elles empruntent pour partie des lignes téléphoniques d'un réseau de téléphonie commuté ou PSTN (pour « Public Switched Telephone Network ») d'un fournisseur d'accès physique. Mais, l'invention s'applique à d'autres types de connexion haut débit, et notamment à celles effectuées par voie d'ondes radio (par exemple WiFi ou WiMAX) ou au moyen de câbles à fibres optiques.

Comme cela est illustré sur l'unique figure, on entend ici par « terminal de communication » tout équipement de communication pouvant être raccordé (dans l'exemple décrit) à une ligne téléphonique d'un réseau de téléphonie commuté ou PSTN, associée à un numéro de téléphone. Il pourra donc s'agir d'un téléphone fixe TS, équipé d'un modem, ou d'un téléphone à protocole internet (ou IP) TIP pourvu d'un modem interne, ou d'un ordinateur fixe ou portable PC raccordé à un modem, ou encore d'une console de jeux ou d'un terminal pour la télévision équipé en interne ou en externe d'un modem.

Les lignes téléphoniques auxquelles peuvent se raccorder les terminaux de communication appartiennent à (ou sont louées par) un ou plusieurs fournisseurs d'accès physique (ou « access providers »). On considère dans ce qui suit, à titre d'exemple non limitatif, qu'il n'existe qu'un unique fournisseur d'accès physique (c'est-à-dire que les liens physiques (câbles pour paire de cuivre) ou les accès radio (WiFi ou WiMAX) sont gérés par un opérateur unique) dont le réseau est raccordé, directement ou par l'intermédiaire d'un commutateur CPE (de type « Customer Premise Equipment »), à au moins un équipement d'accès haut débit EA.

Dans l'exemple décrit, l'équipement d'accès EA est dédié aux connexions xDSL. Il s'agit par exemple d'un équipement de type DSLAM (pour « Digital Subscriber Line Access Multiplexer »). Un tel équipement d'accès xDSL EA est raccordé à l'un des réseaux de transport permettant aux différents types de terminaux de communication d'établir des liaisons avec un réseau de données RD via le réseau privé RF d'un fournisseur de services et via le réseau d'accès physique (ici le réseau PSTN). Par exemple, l'équipement d'accès xDSL EA est raccordé à un réseau à protocole Internet (IP) RIP ou à un réseau ATM (« Asynchronous Transfer Mode » - transmission temporelle asynchrone) RATM, adapté au transport des flux provenant des téléphones IP TIP et des ordinateurs PC (ou consoles).

Il est ici rappelé qu'un équipement d'accès xDSL de type DSLAM est un concentrateur installé auprès d'un commutateur pour mettre en oeuvre une technologie xDSL. Il est généralement constitué de modems et de filtres chargés de concentrer les flux xDSL et d'assurer leur conversion protocolaire afin qu'ils puissent passer du réseau d'accès physique vers leur réseau de transport ATM (RATM) ou IP (RIP).

Les différents réseaux de transport PSTN, RATM et RIP sont par ailleurs raccordés aux réseaux « privés » RFS de différents fournisseurs de services (ou « service providers ») permettant d'accéder à au moins un réseau de données RD, comme par exemple le réseau Internet.

Afin de ne pas surcharger l'unique figure, on n'a représenté qu'un seul réseau privé de fournisseur de services RFS. Mais, dans la réalité de nombreux fournisseurs de services sont raccordés aux différents réseaux de transport et aux différents réseaux de données.

Comme indiqué précédemment, la configuration des connexions xDSL est gérée par un système de gestion SG appartenant généralement au réseau d'accès du fournisseur de l'accès physique. A cet effet le système de gestion SG est connecté non seulement à l'équipement d'accès xDSL EA, mais également au réseau de transport RATM ou RIP auquel est raccordé l'équipement d'accès xDSL EA.

Chaque réseau privé RFS de fournisseur de services peut être géré par son propre système de gestion, ou bien, comme dans l'exemple non limitatif illustré, par le système de gestion SG du fournisseur d'accès (par exemple lorsqu'il s'agit du même opérateur). On considère dans ce qui suit que les réseaux privés RFS des différents fournisseurs de services et le réseau d'accès partagent un même système de gestion SG.

Afin de permettre l'établissement automatique de connexions xDSL entre des terminaux de communication et des réseaux de données via des réseaux de fournisseur(s) d'accès et de fournisseur(s) de services, l'invention propose un dispositif de gestion D pouvant soit faire partie d'un équipement d'accès xDSL EA, soit être raccordé à ce dernier.

Le dispositif de gestion D comprend un module d'analyse MA et un module de gestion MG.

Le module d'analyse MA est chargé d'observer les connexions xDSL au réseau d'accès afin de détecter les erreurs de connexion xDSL des modems des terminaux de communication.

On entend ici par « erreur de connexion » toute situation interdisant l'établissement d'une connexion xDSL, comme par exemple une absence de configuration d'une ligne (ou connexion) xDSL, une absence d'identifiant de fournisseur de services, ou l'impossibilité d'accéder à un fournisseur de services.

Ces erreurs peuvent survenir soit lorsqu'un utilisateur n'a pas encore souscrit d'abonnement xDSL auprès d'un fournisseur de services, soit lorsqu'un utilisateur (dit « nomade » ou « itinérant ») a déjà souscrit un abonnement xDSL, associé à un premier numéro de téléphone, auprès d'un fournisseur de services et qu'il tente d'établir sa connexion xDSL avec son fournisseur à partir d'une ligne téléphonique associée à un second numéro de téléphone.

Dans l'un ou l'autre cas, la connexion xDSL, associée au numéro de téléphone de la ligne à laquelle est raccordé le terminal de communication, n'est pas configurée. Par conséquent, l'équipement d'accès xDSL EA n'est pas non plus configuré pour cette connexion xDSL. Un modem xDSL utilisant une fréquence spécifique pour transmettre des signaux sur une ligne xDSL, le module d'analyse MA peut donc, en observant les signaux qui parviennent au niveau de l'équipement d'accès xDSL EA et les réactions de ce dernier, détecter qu'un modem xDSL tente de se connecter à une ligne xDSL non configurée, associée à un numéro de téléphone donné, ce qui constitue une erreur de connexion xDSL.

Le module d'analyse MA communique au module de gestion MG chaque erreur de connexion xDSL qu'il détecte et la désignation de la ligne téléphonique associée.

Le module de gestion MG est chargé de signaler au système de gestion SG chaque erreur de connexion xDSL détectée et de lui transmettre des informations représentatives au moins d'un fournisseur de services associé au terminal de communication concerné afin qu'il configure l'équipement d'accès xDSL EA et le réseau de transport associé pour que cet équipement puisse accéder au réseau privé RFS de ce fournisseur de services et puisse lui transmettre des données reçues du terminal de communication et représentatives au moins de son utilisateur et du type de connexion xDSL qu'il requiert, en vue de l'établissement de cette dernière.

La transmission des informations représentatives d'un fournisseur de services peut se faire d'au moins deux façons.

Une première façon consiste à faire transmettre par le modem xDSL, du terminal de communication qui requiert une connexion xDSL (pas encore configurée), un identifiant représentatif du fournisseur d'accès que son utilisateur a choisi, comme par exemple un code d'accès. Lorsque le module de gestion MG détecte l'identifiant du fournisseur d'accès, il ordonne à l'équipement d'accès xDSL EA de le transmettre au système de gestion SG qui est alors en mesure de le configurer ainsi que le réseau de transport RATM ou RIP associé pour qu'il puisse accéder au réseau privé RFS du fournisseur de services choisi. Ainsi, une connexion peut être établie entre le modem du terminal de communication (par exemple le PC) requérant une connexion xDSL et le réseau privé RFS du fournisseur d'accès choisi, via l'équipement d'accès xDSL EA.

Une seconde façon consiste à utiliser un premier portail d'enregistrement P1 pour permettre à l'utilisateur de communiquer l'identifiant du fournisseur d'accès qu'il a choisi. Pour ce faire, le système de gestion SG est par exemple agencé, chaque fois que l'équipement d'accès xDSL EA lui signale une erreur de connexion xDSL, pour configurer ce dernier et le réseau de transport RATM ou RIP associé afin que l'équipement d'accès xDSL EA puisse accéder au premier portail P1, qui appartient de préférence au réseau d'accès xDSL. Ainsi, comme illustré en pointillés sur l'unique figure, une première connexion C1 peut être établie entre le modem du terminal de communication (par exemple le PC) requérant une connexion xDSL et le premier portail P1, via l'équipement d'accès xDSL EA.

Grâce à cette première connexion C1, l'utilisateur peut alors sélectionner un fournisseur d'accès et demander au modem xDSL de son terminal de communication PC de transmettre à l'équipement d'accès xDSL EA des données représentatives de l'identifiant du fournisseur d'accès afin qu'il le transmette au premier portail P1. Ce dernier peut ensuite communiquer l'identifiant du fournisseur de services choisi à l'équipement d'accès xDSL EA qui le retransmet au système de gestion SG. Une fois en possession de cet identifiant, le système de gestion SG clôt la première connexion C1, puis il configure l'équipement d'accès xDSL EA et le réseau de transport RATM ou RIP associé afin que l'équipement d'accès xDSL EA puisse accéder au réseau privé RFS du fournisseur de services choisi. Ainsi, comme illustré par des tirets sur l'unique figure, une seconde connexion C2 peut être établie entre le modem du terminal de communication (par exemple le PC) requérant une connexion xDSL et le réseau privé RFS du fournisseur de services choisi, via l'équipement d'accès xDSL EA.

Une fois la (seconde) connexion (C2) établie entre le modem du terminal de communication PC et le réseau privé RFS du fournisseur de services choisi, le module de gestion MG du dispositif D selon l'invention attend que ledit réseau privé RFS communique à l'équipement d'accès xDSL EA une autorisation d'établissement d'une connexion xDSL.

Cette autorisation est par exemple générée par un second portail d'enregistrement P2 raccordé au réseau privé RFS. Ce second portail P2 appartient par exemple au fournisseur de services qui a été choisi. Dans ce cas, chaque fournisseur de services peut disposer de son propre portail P2. Mais, cela n'est pas obligatoire. On peut en effet envisager que les différents fournisseurs de services disposent d'un second portail commun. On peut également envisager, notamment lorsque le fournisseur de l'accès physique est également fournisseur de services, que les premier P1 et second P2 portails ne constituent qu'un seul et même portail centralisé.

Grâce à cette (seconde) connexion (C2), l'utilisateur peut saisir des informations qui le représentent, comme par exemple son identité, son adresse, le numéro de téléphone de la ligne téléphonique qu'il veut utiliser pour la connexion xDSL requise, éventuellement ses coordonnées bancaires, et le type (ou profil) de la connexion xDSL qu'il requiert. Puis, l'utilisateur charge le modem xDSL de son terminal de communication PC de transmettre à l'équipement d'accès xDSL EA les données représentatives des informations saisies afin qu'il les transmette au (second) portail P2. La personne contrôlant ce dernier procède alors aux vérifications habituelles et s'il accepte la demande de connexion xDSL de l'utilisateur il ordonne à son (second) portail P2 de générer une autorisation d'établissement de connexion xDSL à destination de son système de gestion et de celui SG du fournisseur de l'accès physique (qui sont ici confondus). Le système de gestion SG du fournisseur de l'accès physique envoie ensuite les ordres de configuration à l'équipement d'accès xDSL EA, ainsi qu'à tous les autres éléments des réseaux impliqués dans la connexion à établir. Le système de gestion du fournisseur de services (ici également SG) configure le réseau privé RFS qu'il gère.

La configuration conjointe de l'équipement d'accès xDSL EA, du réseau d'accès xDSL, du réseau de transport RIP ou RATM et du réseau privé RFS du fournisseur de services, permettant d'établir physiquement la connexion xDSL requise, est ainsi réalisée.

Une fois cette configuration effectuée, l'utilisateur peut immédiatement utiliser sa connexion xDSL afin d'accéder au(x) réseau(x) de données RD auquel (auxquels) est raccordé le réseau privé RFS de son fournisseur de services.

Dans ce qui précède on a décrit le cas d'un utilisateur qui requérait l'établissement d'une connexion xDSL sans être client d'un fournisseur de services, ou du moins sans avoir souscrit d'abonnement pour la connexion xDSL requise. On va maintenant décrire le cas d'un utilisateur nomade qui requiert l'établissement d'une connexion xDSL pour laquelle il a déjà souscrit un abonnement auprès d'un fournisseur de services, mais pour une autre ligne de téléphone que celle qu'il souhaite utiliser.

Trois situations peuvent se présenter. Dans une première situation la ligne téléphonique que l'utilisateur souhaite utiliser pour se connecter n'est pas configurée. Dans une deuxième situation la ligne téléphonique que l'utilisateur souhaite utiliser pour se connecter est configurée pour un autre fournisseur de services que celui auquel l'utilisateur souhaite se connecter. Dans une troisième situation la ligne téléphonique que l'utilisateur souhaite utiliser pour se connecter est configurée pour le fournisseur de services auquel l'utilisateur souhaite se connecter.

Dans les première et seconde situations, lorsque le module d'analyse MA détecte au niveau de l'équipement d'accès xDSL EA l'erreur de connexion xDSL et l'identifiant (par exemple le code d'accès) du fournisseur de services pour lequel est configuré le modem xDSL du terminal de communication PC souhaitant se connecter, il ordonne à l'équipement d'accès xDSL EA de transmettre cet identifiant au système de gestion SG. Ce dernier est alors en mesure de configurer l'équipement d'accès xDSL EA et le réseau de transport RATM ou RIP associé pour que l'équipement d'accès xDSL EA puisse accéder au réseau privé RFS du fournisseur de services désigné. Une connexion C2 peut alors être établie entre le modem du terminal de communication (par exemple le PC) requérant une connexion xDSL et le réseau privé RFS du fournisseur de services, via l'équipement d'accès xDSL EA.

Comme indiqué précédemment cette connexion C2 peut être plus précisément établie entre le portail P2 du fournisseur de services et le modem du terminal de communication PC, via l'équipement d'accès xDSL EA.

L'utilisateur peut alors saisir des informations qui le représentent auprès du fournisseur de services, comme par exemple son nom d'utilisateur et/ou son mot de passe (ou « login »), ainsi que le numéro de téléphone de la ligne téléphonique qu'il veut utiliser pour la connexion xDSL requise. Puis, l'utilisateur charge le modem xDSL de son terminal de communication PC de transmettre à l'équipement d'accès xDSL EA les données représentatives des informations saisies afin qu'il les transmettent au portail P2.

Le portail P2 vérifie que ces données correspondent effectivement à un client ayant souscrit un abonnement pour une connexion xDSL, et dans l'affirmative il détermine dans une table de correspondance (par exemple), le profil de la connexion xDSL souscrite. Le portail P2 peut éventuellement proposer à l'utilisateur de modifier le profil de la connexion xDSL, et notamment sa bande passante. Ensuite, le portail P2 génère une autorisation d'établissement de connexion xDSL à destination de son système de gestion et de celui SG du fournisseur de l'accès physique (qui sont ici confondus). Le système de gestion SG du fournisseur de l'accès physique envoie ensuite les ordres de configuration à l'équipement d'accès xDSL EA, ainsi qu'à tous les autres éléments des réseaux impliqués dans la connexion à établir. Le système de gestion du fournisseur de services (ici également SG) configure le réseau privé RFS qu'il gère.

Une fois cette configuration effectuée, l'utilisateur peut immédiatement utiliser sa connexion xDSL afin d'accéder au(x) réseau(x) de données RD auquel (auxquels) est raccordé le réseau privé RFS de son fournisseur de services.

Dans la troisième situation, la connexion xDSL étant déjà configurée, l'utilisateur peut directement transmettre au portail P2 de son fournisseur de services les informations qui le représentent auprès du fournisseur de services, comme par exemple son nom d'utilisateur et/ou son mot de passe (ou « login »), au moyen de son terminal de communication (par exemple le PC).

Le portail P2 vérifie que ces données correspondent effectivement à un client ayant souscrit un abonnement pour une connexion xDSL, et dans l'affirmative il détermine dans une table de correspondance (par exemple), le profil de la connexion souscrite. Le portail P2 peut éventuellement proposer à l'utilisateur de préciser la durée souhaitée de la connexion xDSL et/ou de modifier le profil de la connexion xDSL, et notamment sa bande passante. Si une adaptation de la connexion xDSL est requise, le portail P2 en fait la demande auprès du système de gestion SG.

Une fois la vérification effectuée, ainsi que l'éventuelle adaptation, l'utilisateur peut immédiatement utiliser sa connexion xDSL afin d'accéder au(x) réseau(x) de données RD auquel (auxquels) est raccordé le réseau privé RFS de son fournisseur de services.

Le dispositif de gestion D selon l'invention, et notamment son module de gestion MG et son module d'analyse MA, peuvent être réalisés sous la forme de circuits électroniques, de modules logiciels (ou informatiques), ou d'une combinaison de circuits et de logiciels.

Comme indiqué précédemment, le dispositif D selon l'invention peut être intégré à l'équipement d'accès haut débit, notamment pour des raisons de coût. Mais, il pourrait être également installé entre l'équipement d'accès haut débit et la ligne téléphonique.

L'invention offre également un procédé d'établissement de connexions haut débit pour l'accès de terminaux de communication TS, TIP ou PC à un réseau de données RD, via des réseaux RFS de fournisseurs de services et un équipement d'accès haut débit EA raccordé à au moins un réseau d'accès haut débit géré par un système de gestion SG et à au moins un réseau de transport RATM ou RIP, lui-même raccordé aux réseaux des fournisseurs de services RFS.

Ce procédé peut être mis en oeuvre à l'aide du dispositif de gestion D et des réseaux présentés ci-avant. Les fonctions et sous-fonctions principales et optionnelles assurées par les étapes de ce procédé étant sensiblement identiques à celles assurées par les différents moyens constituants le dispositif et les différents réseaux, seules seront résumées ci-après les étapes mettant en oeuvre les fonctions principales du procédé selon l'invention.

Le procédé se caractérise par le fait qu'il consiste i) à observer les connexions haut débit au niveau de l'équipement d'accès haut débit EA et à détecter des erreurs de connexion haut débit de terminaux, ii) à signaler au système de gestion SG chaque erreur de connexion haut débit de terminal détectée et à lui transmettre des informations représentatives au moins d'un fournisseur de services associé audit terminal, et iii) à configurer ledit équipement EA et le réseau de transport RATM ou RIP associé, au moyen du système de gestion SG, pour que cet équipement EA puisse accéder au réseau RFS du fournisseur de services et puisse lui transmettre des données reçues du terminal et représentatives au moins de son utilisateur et du type de connexion haut débit qu'il requiert, en vue de l'établissement de cette dernière.

L'invention ne se limite pas aux modes de réalisation de dispositif de gestion et d'équipement d'accès haut débit décrits ci-avant, seulement à titre d'exemple, mais elle englobe toutes les variantes que pourra envisager l'homme de l'art dans le cadre des revendications ci-après.

## Revendications

1. Dispositif de gestion d'établissement de connexions haut débit (D) pour l'accès de terminaux de communication (TS, PC, TIP) à au moins un réseau de données (RD), via des réseaux (RFS) de fournisseurs de services et un équipement d'accès haut débit (EA) raccordé à au moins un réseau d'accès haut débit géré par un système de gestion (SG) et à au moins un réseau de transport (RATM, RIP), lui-même raccordé aux réseaux des fournisseurs de services (RFS), **caractérisé en ce qu'**il est inclus dans ledit au moins réseau d'accès haut débit et **en ce qu'**il comprend des moyens d'analyse (MA) agencés pour observer les connexions haut débit audit réseau d'accès et détecter des erreurs de connexion haut débit de terminaux, et des moyens de gestion (MG) agencés pour signaler audit système de gestion (SG) chaque erreur de connexion haut débit de terminal détectée et lui transmettre des informations représentatives au moins d'un fournisseur de services associé audit terminal afin qu'il configure ledit équipement (EA) et le réseau de transport (RATM, RIP) associé pour que ledit équipement (EA) puisse accéder au réseau (RFS) dudit fournisseur de services et puisse lui transmettre des données reçues dudit terminal et représentatives au moins de son utilisateur et du type de connexion haut débit qu'il requiert, en vue de l'établissement de cette dernière.

2. Dispositif selon la revendication 1, **caractérisé en ce que** lesdits moyens de gestion (MG) sont agencés i) pour signaler une erreur de connexion haut débit audit système de gestion (SG) afin qu'il configure ledit équipement (EA) pour qu'il puisse accéder à un portail (P1) connecté audit réseau d'accès haut débit et puisse lui transmettre des données reçues dudit terminal et représentatives du fournisseur de services que son utilisateur a choisi, et ii) pour transmettre lesdites données représentatives du fournisseur de services audit système de gestion (SG) de sorte qu'il procède à ladite configuration dudit équipement (EA) et du réseau de transport (RATM, IP) associé pour que ledit équipement (EA) accède audit réseau (RFS) dudit fournisseur de services.

3. Dispositif selon l'une des revendications 1 et 2, **caractérisé en ce qu'**en présence d'un terminal utilisé par un client d'un fournisseur de services identifié par un code d'accès, lesdits moyens de gestion (MG) sont agencés pour transmettre audit système de gestion (SG) des informations représentatives dudit code d'accès de sorte qu'il détermine le fournisseur de services correspondant audit code d'accès et procède à ladite configuration dudit équipement (EA) et du réseau de transport (RATM, IP) associé pour que ledit équipement (EA) accède audit réseau (RFS) dudit fournisseur de services.

4. Dispositif selon la revendication 3, **caractérisé en ce que** lesdits moyens de gestion (MG) sont agencés pour communiquer audit équipement (EA) des données représentatives d'un nom d'utilisateur et/ou d'un mot de passe reçus dudit terminal afin qu'il le(s) transmette audit réseau (RFS) dudit fournisseur de services pour qu'il détermine s'il(s) appartienne(nt) à un client et détermine le type de connexion haut débit associé.

5. Equipement d'accès haut débit (EA) pour un réseau d'accès haut débit, **caractérisé en ce qu'**il comprend un dispositif de gestion (D) selon l'une des revendications précédentes.

6. Procédé d'établissement de connexions haut débit pour l'accès de terminaux de communication (TS, TIP, PC) à au moins un réseau de données (RD), via des réseaux (RFS) de fournisseurs de services et un équipement d'accès haut débit (EA) raccordé à au moins un réseau d'accès haut débit géré par un système de gestion (SG) et à au moins un réseau de transport (RATM, RIP), lui-même raccordé aux réseaux des fournisseurs de services (RFS), **caractérisé en ce qu'**il consiste i) à observer les connexions haut débit au niveau dudit équipement d'accès haut débit (EA) et à détecter des erreurs de connexion haut débit de terminaux, ii) à signaler audit système de gestion (SG) chaque erreur de connexion haut débit de terminal détectée et à lui transmettre des informations représentatives au moins d'un fournisseur de services associé audit terminal, et iii) à configurer ledit équipement (EA) et le réseau de transport (RATM, IP) associé, au moyen dudit système de gestion (SG), pour que ledit équipement (EA) puisse accéder au réseau (RFS) dudit fournisseur de services et puisse lui transmettre des données reçues dudit terminal et représentatives au moins de son utilisateur et du type de connexion haut débit qu'il requiert, en vue de l'établissement de cette dernière.

7. Procédé selon la revendication 6, **caractérisé en ce qu'**en cas de décision d'autoriser l'établissement d'une connexion haut débit par un fournisseur de services, le réseau (RFS) du fournisseur de services transmet ladite autorisation audit système de gestion (SG) afin qu'il configure au moins ledit équipement (EA) et ledit réseau d'accès haut débit de manière à permettre l'établissement de la connexion haut débit requise.

8. Procédé selon l'une des revendications 6 et 7, **caractérisé en ce qu'**à réception d'un signalement d'erreur de connexion haut débit ledit système de gestion (SG) configure ledit équipement (EA) pour qu'il puisse accéder à un portail (P1) dudit réseau d'accès haut débit et puisse lui transmettre des données reçues dudit terminal et représentatives du fournisseur de services que son utilisateur a choisi, puis on transmet ces données représentatives du fournisseur de services audit système de gestion (SG) de sorte qu'il procède à ladite configuration dudit équipement (EA) et du réseau de transport (RATM, IP) associé pour que ledit équipement (EA) accède audit réseau (RFS) dudit fournisseur de services.

9. Procédé selon l'une des revendications 6 à 8, **caractérisé en ce qu'**en présence d'un terminal utilisé par un client d'un fournisseur de services identifié par un code d'accès, on transmet audit système de gestion (SG) des informations représentatives dudit code d'accès de sorte qu'il détermine le fournisseur de services correspondant audit code d'accès, et procède à ladite configuration dudit équipement (EA) et du réseau de transport (RATM, IP) associé pour que ledit équipement (EA) accède audit réseau (RFS) dudit fournisseur de services.

10. Procédé selon la revendication 9, **caractérisé en ce que** l'utilisateur du terminal communique audit équipement (EA) des données représentatives d'un nom d'utilisateur et/ou d'un mot de passe afin qu'il le(s) transmette audit réseau (RFS) dudit fournisseur de services pour qu'il détermine s'il(s) appartienne(nt) à un client et le type de connexion haut débit associé.

11. Procédé selon l'une des revendications 6 à 10, **caractérisé en ce que** le réseau (RFS) du fournisseur de services requiert auprès dudit terminal la durée de la connexion haut débit demandée.

12. Procédé selon l'une des revendications 10 et 11, **caractérisé en ce qu'**en cas de transmission audit réseau du fournisseur de services (RFS), par ledit terminal, de données représentatives de nouvelles caractéristiques de connexion haut débit, ledit système de gestion (SG) adapte l'ancienne connexion haut débit associée au nom d'utilisateur et/ou au mot de passe reçus.

13. Procédé selon l'une des revendications 6 à 12, **caractérisé en ce que** ledit système de gestion (SG) configure ledit équipement (EA) et le réseau de transport associé pour que ledit équipement (EA) accède à un portail (P2) connecté au réseau (RFS) dudit fournisseur de services et lui transmette lesdites données reçues dudit terminal.

14. Procédé selon la revendication 13, **caractérisé en ce que** ledit réseau (RFS) du fournisseur de services génère chaque autorisation d'établissement d'une connexion haut débit au niveau dudit portail (P2).
